# EUROPEAN PATENT APPLICATION

(11) **EP 4 059 972 A1**
(43) Date of publication of application: **21.09.2022**
(21) Application number: 20887026.1
(22) Date of filing: 09.11.2020
(51) Int. Cl.: C08G 59/40, C08G 59/50, C08G 59/66, C09J 11/06, C09J 163/02

(54) **EPOXY RESIN COMPOSITION**

(30) Priority: 11.11.2019 JP 2019203667
(71) Applicant: Toray Fine Chemicals Co., Ltd., Tokyo 101-0041 (JP)
(72) Inventor: ABE, Hiromitsu, Ichihara-shi, Chiba 299-0196 (JP); HAMADA, Yukiko, Ichihara-shi, Chiba 299-0196 (JP); OBA, Tomohiro, Tokai-shi, Aichi 476-8567 (JP)
(74) Representative: Mewburn Ellis LLP
(86) International application number: PCT/JP2020/041688
(87) International publication number: WO 2021/095677

(57) **Abstract**

The invention aims to provide an epoxy resin composition that can cure rapidly and form an only slightly colored cured product. The invention relates to an only slightly colored or completely colorless epoxy resin composition including an epoxy resin containing two or more epoxy groups in one molecule, a thiol compound containing two or more thiol groups in one molecule, and an amine compound.

## Description

### TECHNICAL FIELD

The present invention relates to an epoxy resin composition including an epoxy resin having two or more epoxy groups in one molecule, a thiol compound having two or more thiol groups in one molecule, and an amine compound. The present invention relates particularly to an epoxy resin composition that can cure rapidly and form a colorless cured product.

### BACKGROUND ART

Having high adhesiveness, high chemical resistance, and good physical properties, epoxy resins have been conventionally in wide use as adhesives and the like. To serve for applications that require rapid curing and high adhesive strength, there are known good methods including the addition of a thiol compound and an amine as a curing agent and as a curing accelerator, respectively.

Many compounds that contain terminal thiol groups and contain no polysulfide skeletons in the main chains have been reported to serve to undergo rapid reaction between a thiol group and an epoxy group (see, for example, Patent document 1). In particular, many compounds that contain a polyether skeleton in the main chain and contain three or more thiol groups in one molecule have been widely available on the market as epoxy resin curing agents that are both economical and safe. Such compounds that contain a polyether skeleton in the main chain and contain three or more thiol groups in one molecule include, for example, Polythiol QE-340M, manufactured by Toray Fine Chemicals Co., Ltd., and Capcure 3-800 and GPM-800, manufactured by Gabriel Performance Products.

Amines widely used as curing accelerators for thiol groups and epoxy groups include 2,4,6-tris(dimethylaminomethyl)phenol (ANCAMINE K-54, manufactured by Evonik Industries), N,N-dimethylpropylamine, bis(2-dimethylaminoethyl)ether, and other tertiary amines.

However, since conventionally known epoxy resin compositions turn yellow and become colored when cured, they are not suitable for applications such as adhesives for glass, adhesives for ornaments, or the like that are required to be colorless.

Conventionally known colorless epoxy resin compositions are low in curing rate and unsuitable for applications where rapid curing is required. Thus, it has been difficult to produce an epoxy resin composition composed mainly of an epoxy resin, a thiol compound, and an amine compound that is both fast-curing and colorless.

### PRIOR ART DOCUMENTS

### PATENT DOCUMENTS

Patent document 1: Japanese Unexamined Patent Publication (Kokai) No. HEI 8-269203

### SUMMARY OF INVENTION

### PROBLEMS TO BE SOLVED BY THE INVENTION

The main object of the present invention is to provide an epoxy resin composition that can cure rapidly and form a cured product that is colorless as a color tone property.

### MEANS OF SOLVING THE PROBLEMS

The present invention provides a colorless epoxy resin composition including an epoxy resin containing two or more epoxy groups in one molecule, a thiol compound containing two or more thiol groups in one molecule, and an amine compound.

### ADVANTAGEOUS EFFECTS OF THE INVENTION

The epoxy resin composition according to the present invention is high in curing rate. It is particularly high in curing rate as compared with curable compositions containing an epoxy resin, a conventional thiol compound containing two or more thiol groups in one molecule, and an amine.

The epoxy resin composition according to the present invention is high in curing rate, and when cured, the epoxy resin composition according to the present invention forms a cured product that is only slightly colored or completely colorless.

If the epoxy resin composition according to the present invention is used as an adhesive, a strong adhesive strength can be achieved for various adherends including metallic and glass materials. The epoxy resin composition according to the present invention can be used as an adhesive, sealing material, potting material, coating material, resin modifier, and the like.

Being colorless in particular, the epoxy resin composition according to the present invention can serve for applications that require both a high curing rate and colorlessness, such as adhesives for glass, adhesives for ornaments, adhesives for clock parts, adhesives for electric and electronic devices, potting materials for electric and electronic devices, and adhesives for home carpentry.

### DESCRIPTION OF PREFERRED EMBODIMENTS

The present invention provides a colorless epoxy resin composition including an epoxy resin containing two or more epoxy groups in one molecule, a thiol compound containing two or more thiol groups in one molecule, and an amine compound.

The epoxy resin to be used for the present invention may be a compound having an oxirane ring in its molecule. The epoxy resin to be used is not particularly limited, and examples include polyfunctional glycidyl amine resins such as bisphenol type epoxy resin, biphenyl type epoxy resin, alicyclic epoxy resin, and tetraglycidyl aminodiphenyl methane; polyfunctional glycidyl ether resins such as tetraphenyl glycidyl ether ethane; and others such as phenol novolac type epoxy resin and cresol novolac type epoxy resin. These epoxy resins may be used singly or as a combination of two or more thereof.

For the present invention, specific examples of an epoxy resin having two or more epoxy groups in one molecule include epoxy resins produced by adding epichlorohydrin to a multivalent phenol such as bisphenol A, bisphenol F, resorcinol, hydroquinone, pyrocatechol, 4,4-dihydroxybiphenyl, and 1,5-hydroxynaphthalene; epoxy resins produced by adding epichlorohydrin to a polyhydric alcohol such as ethylene glycol, propylene glycol, and glycerin; epoxy resins produced by adding epichlorohydrin to an aromatic dicarboxylic acid such as oxybenzoic acid and phthalic acid; and others such as polysulfide polymers having an terminal epoxy group (FLEP-50 and FLEP-60 (trade names), both manufactured by Toray Fine Chemicals Co., Ltd.).

The epoxy resin having two or more epoxy groups in one molecule used for the present invention is preferably liquid at room temperature. More preferable examples of the epoxy resin having two or more epoxy groups in one molecule to be used for the present invention include jER-828 (trade name, manufactured by Mitsubishi Chemical Corporation), DER-331 (trade name, manufactured by The Dow Chemical Company), jER-825 (trade name, manufactured by Mitsubishi Chemical Corporation), jER-827 (trade name, manufactured by Mitsubishi Chemical Corporation), jER-806 (trade name, manufactured by Mitsubishi Chemical Corporation), and jER-807 (trade name, manufactured by Mitsubishi Chemical Corporation).

The epoxy resin having two or more epoxy groups in one molecule to be used for the present invention preferably has an epoxy equivalent of 50 to 1,000 g/eq. The epoxy resin having two or more epoxy groups in one molecule to be used for the present invention still more preferably has an epoxy equivalent of 100 to 300 g/eq.

Examples of the thiol compound having two or more thiol groups in one molecule to be used for the present invention include ethylene glycol bis(3-mercaptopropionate), diethylene glycol bis(3-mercaptopropionate), tetraethylene glycol bis(3-mercaptopropionate), 1,2-propylene glycol bis(3-mercaptopropionate), diethylene glycol bis(3-mercaptobutyrate), 1,4-butanediol bis(3-mercaptopropionate), 1,4-butanediol bis(3-mercaptobutyrate), 1,8-octanediol bis(3-mercaptopropionate), 1,8-octanediol bis(3-mercaptobutyrate), hexanediol bisthioglycolate, trimethylolpropane tris(3-mercaptopropionate), trimethylolpropane tris(3-mercaptobutyrate), trimethylolpropane tris(3-mercaptoisobutyrate), trimethylolpropane tris(2-mercaptoisobutyrate), trimethylolpropane tris-thioglycolate, tris-[(3-mercaptopropionyloxy)-ethyl]-isocyanurate, trimethylolethane tris(3-mercaptobutyrate), pentaerythritol tetrakis(3-mercaptopropionate), pentaerythritol tetrakis(3-mercaptobutyrate), pentaerythritol tetrakis(3-mercaptoisobutyrate), pentaerythritol tetrakis(2-mercaptoisobutyrate), dipentaerythritol hexakis(3-mercaptopropionate), dipentaerythritol hexakis(2-mercaptopropionate), dipentaerythritol hexakis(3-mercaptobutyrate), dipentaerythritol hexakis(3-mercaptoisobutyrate), dipentaerythritol hexakis(2-mercaptoisobutyrate), pentaerythritol tetrakis-thioglycolate, dipentaerythritol hexakis-thioglycolate, and thiol compounds containing a polyether portion in the main chain.

Preferred examples of the thiol compound having two or more thiol groups in one molecule include compounds having 3 or more thiol groups in one molecule such as trimethylolpropane tris(3-mercaptopropionate), pentaerythritol tetrakis(3-mercaptopropionate), trimethylolethane tris(3-mercaptobutyrate), pentaerythritol tetrakis(3-mercaptoacetate), and thiol compounds containing a polyether portion in the main chain.

The thiol compound having two or more thiol groups in one molecule is preferably one as specified below.

It has a polyether portion in the main chain as represented by the general formula (1) given below.

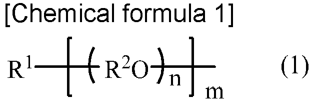

(Here, R¹ is the residue left after removing m hydrogen atoms from a multivalent amine or polyhydric alcohol containing 10 or less carbon atoms; R² is an alkylene group containing 2 to 4 carbon atoms; n is the number of repetitions and is an integer of 1 to 200; and m is the number of sections bonded to R¹ and is an integer of 2 to 8.)

Furthermore, the thiol compound has a functional group containing a thiol group as represented by the general formula (2) given below.

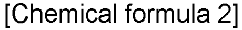

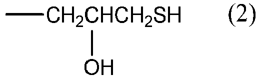

It is preferable for the functional group represented by the formula (2) to be bonded as part of a chemical bond whose bonding partner is not shown in the formula (1).

Examples of such a compound include Polythiol QE-340M, manufactured by Toray Fine Chemicals Co., Ltd., and Capcure 3-800 and GPM-800, manufactured by Gabriel Performance Products.

In the general formula (1), R¹ is the residue left after removing m hydrogen atoms from a multivalent amine or a polyhydric alcohol containing 10 or less carbon atoms. Examples of such a multivalent amine or a polyhydric alcohol containing 10 or less carbon atoms include, for example, glycerin, trimethylolpropane, trimethylolethane, hexanetriol, diglycerin, pentaerythritol, triethanol amine, ethylene diamine, and sucrose. These multivalent amines and polyhydric alcohols may be used singly or in combination. Of the above polyols, glycerin, trimethylolpropane, and trimethylol ethane are particularly preferable.

In the general formula (1) given above, R² is an alkylene group containing 2 to 4 carbon atoms. Examples of such an alkylene group containing 2 to 4 carbon atoms include ethylene, n-propylene, isopropylene, n-butylene, and isobutylene.

In the general formula (1) given above, n is an integer of 1 to 200, preferably an integer of 1 to 100. Furthermore, m is an integer of 2 to 8, preferably an integer of 2 to 5.

The thiol compound containing two or more thiol groups in one molecule used for the present invention preferably has a thiol group content of 1% to 50% and more preferably has a mercaptan content of 5% to 20%.

For the present invention, the thiol compound may account for any appropriate proportion depending on the physical properties of the epoxy resin composition under design, but it preferably accounts for 50 to 150 parts by mass relative to 100 parts by mass of the epoxy resin that contains two or more epoxy groups in one molecule. If the thiol compound accounts for 50 to 150 parts by mass relative to 100 parts by mass of the epoxy resin that contains two or more epoxy groups in one molecule, the resulting epoxy resin composition will have a high curing rate and develop a sufficient adhesive strength. The thiol compound more preferably accounts for 60 to 120 parts by mass, still more preferably accounts for 70 to 100 parts by mass, relative to 100 parts by mass of the epoxy resin that contains two or more epoxy groups in one molecule.

The amine compound used for the present invention has an amino group. The amine compound, which is an essential component for the present invention, is preferably not an amine in which all amino groups are tertiary amino groups.

The amine compound used for the present invention is preferably an aliphatic amine. The amine compound used for the present invention is more preferably an aliphatic amine having no tertiary amino group. Examples of such an aliphatic amine having no tertiary amino group include ethylenediamine, 1,2-diaminopropane, 1,3-diaminopropane, 1,5-diaminopentane, hexamethylenediamine, tetramethylenediamine, trimethylhexamethylenediamine, 2-methyl-1,5-diaminopentane, polyetherdiamine, diethylenetriamine, triethylenetetramine, tetraethylenepentamine, pentaethylenehexamine, dipropylenetriamine, and bis(hexamethylene)triamine.

Furthermore, examples of such an amine containing two or more amino groups in one molecule and containing no tertiary amino group in the molecule include ethylenediamine, 1,2-diaminopropane, 1,3-diaminopropane, 1,5-diaminopentane, hexamethylenediamine, tetramethylenediamine, trimethylhexamethylenediamine, 2-methyl-1,5-diaminopentane, polyetherdiamine, diethylenetriamine, triethylenetetramine, tetraethylenepentamine, pentaethylenehexamine, dipropylenetriamine, bis(hexamethylene)triamine, diethylenetriamine, triethylenetetramine, tetraethylenepentamine, pentaethylenehexamine, dipropylenetriamine, and bis(hexamethylene)triamine. The amine containing two or more amino groups in one molecule and containing no tertiary amino group in the molecule is more preferably ethylenediamine, diethylenetriamine, triethylenetetramine, 1,3-diaminopropane, or tetraethylenepentamine.

The amine compound used for the present invention is preferably not an amine in the form of an aliphatic amine in which all amino groups are secondary amino groups.

The amine compound used for the present invention is preferably an amine containing 3 or more amino groups in one molecule. Preferable examples of the amine containing 3 or more amino groups in one molecule include diethylenetriamine, triethylenetetramine, tetraethylenepentamine, pentaethylenehexamine, dipropylenetriamine, and bis(hexamethylene)triamine, of which triethylenetetramine is more preferable.

The amine compound used for the present invention is preferably a modified product produced from an original amine containing 3 or more amino groups in one molecule. The modified product produced from an original amine containing 3 or more amino groups in one molecule is particularly preferably a modified product of diethylenetriamine, a modified product of triethylenetetramine, a modified product of tetraethylenepentamine, of which more preferable is a modified product produced through a reaction between an amino group in triethylenetetramine and a monoepoxy or polyepoxy compound. Examples of the modified product produced from an original amine containing 3 or more amino groups in one molecule include BB-AMINE 3138, manufactured by BB RESINS SRL.

Such a modified product useful for the present invention that is produced from an original amine containing 3 or more amino groups in one molecule preferably has an amine value of 500 to 2,500 KOHmg/g and more preferably has an amine value of 800 to 1,700 KOHmg/g.

For the present invention, the amine compound may account for any appropriate proportion depending on the physical properties of the cured product under design, but the amine compound preferably accounts for 1 to 30 parts by mass relative to 100 parts by mass of the epoxy resin that contains two or more epoxy groups in one molecule. If the amine compound accounts for 1 to 30 parts by mass relative to 100 parts by mass of the epoxy resin that contains two or more epoxy groups in one molecule, it will have a high curing rate and a sufficient adhesive strength and can form a cured product that has a high degree of colorlessness. The amine compound more preferably accounts for 1 to 30 parts by mass, still more preferably accounts for 2 to 30 parts by mass, relative to 100 parts by mass of the epoxy resin that contains two or more epoxy groups in one molecule.

The epoxy resin composition according to the present invention can be cured at room temperature. The epoxy resin composition according to the present invention forms a cured product that is only slightly colored or completely colorless as a color tone property.

For the present invention, the expression "being only slightly colored or completely colorless" means that a 1 cm thick sample of the cured product gives an a* chromaticity value of -20 to 20 and a b* chromaticity value of -15 to 15 according to the color system. A cured product with an a* chromaticity value outside the -20 to 20 range has a darker color and is not regarded as being colorless. For the epoxy resin composition according to the present invention, it is preferable that a 1 cm thick sample of its cured product give an a* chromaticity value of -15 to 15 and a b* chromaticity value of -15 to 15 according to the color system. For the epoxy resin composition according to the present invention, it is more preferable that a 1 cm thick cured product sample prepared by curing for 24 hours under the conditions of 23°C and 50%RH give an a* chromaticity value of -10 to 10 and a b* chromaticity value of -15 to 15 according to the color system.

For the color tone of the epoxy resin composition according to the present invention, it is more preferable that a 1 cm thick cured product sample give an L* lightness value of 50 or more, more preferably 60 or more, in the Lab color space.

For the epoxy resin composition according to the present invention, its cured product more preferably gives an a* chromaticity value of -7 to 0, still more preferably -7 to -2.

For the epoxy resin composition according to the present invention, its cured product preferably gives a b* chromaticity value of -12 to 12, more preferably 0 to 12, and still more preferably 5 to 12.

The aforementioned Lab color space was defined by the International Commission on Illumination (CIE) in 1976 as a color specification method. It expresses color as three values, namely, L* value for lightness, a* value for the ratio between magenta and green, and b* value for the ratio between yellow and blue, that are determined on the basis of physical measurement of the stimulus quantity of colored light that causes color sensation. The aforementioned L* value defines black at 0 and white at 100. The a* value indicates a color closer to green if negative and a color closer to magenta if positive, whereas the b* value indicates a color closer to blue if negative and a color closer to yellow if positive.

Values in the aforementioned Lab color space are determined by taking measurements using a color difference meter as specified in the Japanese Industrial Standard (JIS) Z 8781-4 (2013) (for example, CR-300 (trade name) color difference meter manufactured by Minolta).

The curing time of the epoxy resin composition according to the present invention is preferably 1 to 20 minutes. The curing time of the epoxy resin composition according to the present invention is more preferably 1 to 15 minutes and still more preferably 1 to 10 minutes.

For the present invention, the curing time was measured according to the pot life measuring method for multicomponent adhesives (Method 1) specified in JIS K 6870 (2008). For the present invention, a thiol compound and an amine compound are mixed at a predetermined ratio in 10 g of epoxy resin under the conditions of 23°C and 50%RH. Then, a toothpick is put in the epoxy resin composition, and the time it requires to become immovable is defined as the curing time.

The epoxy resin composition according to the present invention may additionally contains a filler, plasticizer, flexibility improver, coupling agent, antioxidant, thixotropy improver, dispersing agent, and the like, unless they impair the purposes of the present invention.

The epoxy resin composition according to the present invention can adhere strongly to metal, glass, stone, concrete, and the like, and can be used as a component of adhesives. Adhesives containing the epoxy resin composition according to the present invention can be used as, for example, adhesives for iron plates, adhesives for glass, adhesives for ornaments, adhesives for clock parts, and adhesives for home carpentry.

Epoxy resin compositions containing a bisphenol A type epoxy resin with an epoxy equivalent of 184 to 194 as the epoxy resin, Polythiol QE-340M, manufactured by Toray Fine Chemicals Co., Ltd., as the thiol compound, and 2,4,6-tris(dimethylaminomethyl)phenol (ANCAMINE K54, manufactured by Evonik Industries) as the amine compound are now in general use as adhesives for metal. An adhesive having a tensile shear adhesive strength of 4 MPa or more to mild steel plates can serve suitably as an adhesive for metal. The epoxy resin composition according to the present invention can serve sufficiently as an adhesive because it has a tensile shear adhesive strength of 4 MPa or more to mild steel plates.

Furthermore, the epoxy resin composition according to the present invention can serve sufficiently as a fast-curing adhesive because it can cure within 10 minutes under the conditions of a temperature of 23°C and a humidity of 50%RH and develops a tensile shear adhesive strength of 4 MPa or more to mild steel plates in 24 hours.

Epoxy resin compositions containing a bisphenol A type epoxy resin with an epoxy equivalent of 184 to 194 as the epoxy resin, Polythiol QE-340M, manufactured by Toray Fine Chemicals Co., Ltd., as the thiol compound, and 2,4,6-tris(dimethylaminomethyl)phenol (ANCAMINE K54, manufactured by Evonik Industries) as the amine compound are also in general use as adhesives for glass. In an evaluation of the strength of adhesion to glass, they can maintain adhesion for 72 hours with a weight of 500 g attached and hung, indicating that they can serve sufficiently as adhesives for glass.

### EXAMPLES

Examples and comparative examples are described below. In the examples and comparative examples given below, general type reagents available from reagent manufacturers were used as ingredient materials unless otherwise specified explicitly. The instruments and methods described below were used for analysis.

### • Deaeration and mixing

For correct measurement of the color tone of cured epoxy resin, the epoxy resin composition prepared by mixing the ingredient materials for each example was deaerated. Specifically, a cup containing an epoxy resin composition was set in an Awatori Rentaro (registered trademark, ARE-310, manufactured by Thinky Corporation) and deaerated while mixing for one minute in the "Mix" stirring mode (revolution speed 2,000 rpm, rotation speed 800 rpm).

### • Lightness and chromaticity

The lightness and chromaticity of the epoxy resin composition were measured. Specifically, using a color difference meter as specified in JIS Z 8781-4 (CR-300, manufactured by Minolta), an epoxy resin composition prepared for each example was cured in a 100 ml container under the conditions of 23°C and 50%RH to provide a cured product with a thickness of 1 cm. After 24 hours, the cured product was taken out of the container, and the L* lightness value, a* chromaticity value, and b* chromaticity value of the 1 cm thick cured epoxy resin product were measured at room temperature. In addition, the 1 cm thick cured epoxy resin product was left to stand for a predetermined number of days under the conditions of 23°C and 50%RH and examined to determine the lightness and chromaticity values of the cured epoxy resin product after the elapse of that number of days.

### • Curing time

The curing time of the epoxy resin composition was measured according to the pot life measuring method for multicomponent adhesives (Method 1) specified in JIS K 6870. A toothpick was put in the epoxy resin composition, and the time it required to become immovable was defined as the curing time. More specifically, under the conditions of 23°C and 50%RH, an epoxy resin composition was prepared by mixing the ingredient materials for each example and a toothpick was put in it. Then, the time it required to become immovable was determined as the curing time. The curing time starts at the premixing onset point and includes the deaeration/mixing period. The state of curing was measured at intervals of 30 seconds and the curing time was determined in minutes. In Examples 1 to 9 and Comparative examples 1 to 10, a thiol compound and an amine compound were mixed at a ratio specified in Examples 1 to 9 and Comparative examples 1 to 10, respectively, in 10 g of epoxy resin.

### • The time the toothpick requires to become immovable when using 30 g of epoxy resin

In Example 10 and Comparative example 11, a thiol compound and an amine compound were mixed at a ratio specified in Example 10 and Comparative example 11, respectively, in 30 g of epoxy resin. Under the conditions of 23°C and 50%RH, an epoxy resin composition was prepared by mixing the ingredient materials for each example and a toothpick was put in it. Then, the time it required to become immovable was measured. Measurement of the time the toothpick requires to become immovable starts at the premixing onset point and includes the deaeration/mixing period. In Example 10 and Comparative example 11, in which the amount of epoxy resin was larger than 10 g, the time the toothpick requires to become immovable changed due to the influence of the reaction heat as compared with Example 1 and Comparative example 5 although the epoxy resin, thiol compound, and amine compound were mixed at the same ratio.

### • Hardness

The hardness of each epoxy resin composition was measured according to the method specified in JIS K 7215. Specifically, in a room maintained at a temperature of 23°C and a humidity of 50%RH, an epoxy resin composition was poured into the inner lid of a 100 mL wide mouthed plastic container and a specimen for measurement with a size of 31 mm (diameter) x 8 mm was obtained after a 24 hour period starting at the premixing onset point of the epoxy resin composition. A smooth part of the surface of the specimen was examined using a type D durometer. Three measurements were taken and the average was adopted to represent the hardness.

### • Tensile shear adhesive strength

The tensile shear adhesive of each epoxy resin composition was measured according to the method specified in JIS K 6850. The measuring procedure is described in detail below.

Adherend: a 100 mm x 25 mm x 3 mm mild steel plate (dull finished) with a surface treated by polishing with #80 sand paper, degreased with acetone, and subsequently degreased with methyl ethyl ketone

Test piece: prepared in a room maintained at a temperature of 23°C and a humidity of 50%RH according to the method specified in JIS K 6850. Specifically, an adherend was coated with an epoxy resin composition and combined with another adherend with an overlap length of 12.5 mm and an adhesion layer thickness of about 0.2 mm, followed by curing at a temperature of 23°C and a humidity of 50%RH. Then, the tensile shear adhesive strength was measured after a 24 hour period starting at the premixing onset point of the epoxy resin composition.

Measuring method: using a tensile tester as specified in JIS K 6850 in a room maintained at a temperature of 23°C and a humidity of 50%RH to measure the tensile shear adhesive strength at a pulling speed of 2.0 mm/min. Measurements were taken from three test pieces and the average was adopted to represent the tensile shear adhesive strength.

### • Adhesive strength of glass

In a room maintained at a temperature of 23°C and a humidity of 50%RH, a glass plate with a length of 50 mm, a width of 50 mm, and a thickness of 5 mm was coated with an epoxy resin composition and combined with another adherend with an overlap length of 10 mm and an adhesion layer thickness of about 0.2 mm, followed by curing at a temperature of 23°C and a humidity of 50%RH. The curing was continued for a 24 hour period starting at the premixing onset point of the epoxy resin composition. After the curing step, both ends of the glass test piece were held by clips and a weight of 500 g was hung on one clip while the other clip was fixed to a rod, followed by an evaluation of the adhesive strength of the hanging test piece.

Evaluation method: The test piece was rated as acceptable if adhesion was maintained for 72 hours after the start of hanging.

### Example 1

Under the conditions of 23°C and 50%RH, 9.5 g (95.0 parts by mass) of a thiol compound (Polythiol QE-340M, manufactured by Toray Fine Chemicals Co., Ltd.) and 0.5 g (5.0 parts by mass) of an amine compound (BB-AMINE 3138, manufactured by BB RESINS SRL) were premixed with 10 g (100.0 parts by mass) of an epoxy resin (jER828, manufactured by Mitsubishi Chemical Corporation, bisphenol A type epoxy resin with epoxy equivalent of 184 to 194) using a spatula for 15 seconds, followed by deaeration and mixing to prepare an epoxy resin composition.

The resulting epoxy resin composition was subjected to curing time measurement at 23°C. It cured in 10 minutes.

In addition, the cured product obtained by curing the epoxy resin composition was examined to determine its lightness and chromaticity values. The 1 cm thick cured product had an a* chromaticity value of -4.7 and a b* chromaticity value of 7.4 according to the color system, and the cured product was colorless. Results are given in Table 1. Specimens of the cured product were stored at 23°C for 7 days or 30 days to measure the aging variation in the lightness value and the a* and b* chromaticity values of the 1 cm thick cured product. Results are given in Table 3. There were no variations in the lightness and chromaticity values during the one month period after curing, and the cured product suffered no deterioration in color tone and remained colorless.

In addition, the hardness of the cured epoxy resin composition and its tensile shear adhesive strength to a mild steel plate were measured. After standing for 24 hours at a temperature of 23°C and a humidity of 50%RH, the cured product had a hardness of 79, proving that it had a sufficiently high hardness. After standing for 24 hours at a temperature of 23°C and a humidity of 50%RH, the cured product showed a tensile shear adhesive strength of 11.2 MPa to a mild steel plate, proving that it had a sufficiently high adhesive strength to serve as a fast-curing type adhesive. Results are given in Table 4.

In the evaluation of adhesion to glass, it was shown that adhesion was maintained for 72 hours after the start of hanging. Results are given in Table 5.

### Example 2

Except for using 8.9 g (89.0 parts by mass) of Polythiol QE-340M, manufactured by Toray Fine Chemicals Co., Ltd., as the thiol compound and using 1.1 g (11.0 parts by mass) of BB-AMINE 3138, manufactured by BB RESINS SRL, as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 5 minutes. After 24 hours, the lightness and chromaticity values of the 1 cm thick cured epoxy resin were measured by the same procedure as in Example 1. The 1 cm thick cured product had an a* chromatic value of -4.5 and a b* value of 6.3 according to the color system, and the cured product was colorless. Results are given in Table 1.

In addition, the hardness of the cured product of the epoxy resin composition and its tensile shear adhesive strength to a mild steel plate were measured. After standing for 24 hours at a temperature of 23°C and a humidity of 50%RH, it had a hardness of 78, proving a sufficiently high hardness. After standing for 24 hours at a temperature of 23°C and a humidity of 50%RH, it showed a tensile shear adhesive strength of 8.0 MPa to a mild steel plate, proving that it had a sufficiently high adhesive strength to serve as a fast-curing type adhesive. Results are given in Table 4.

In the evaluation of adhesion to glass, it was shown that adhesion was maintained for 72 hours after the start of hanging. Results are given in Table 5.

### Example 3

Except for using 7.0 g (70.0 parts by mass) of Polythiol QE-340M, manufactured by Toray Fine Chemicals Co., Ltd., as the thiol compound and using 3.0 g (30.0 parts by mass) of BB-AMINE 3138, manufactured by BB RESINS SRL, as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 3 minutes. After 24 hours, the lightness and chromaticity values of the 1 cm thick cured epoxy resin were measured by the same procedure as in Example 1. The 1 cm thick cured product had an a* chromatic value of -4.9 and a b* value of 7.3 according to the color system, and the cured product was colorless. Results are given in Table 1.

In addition, the hardness of the cured product of the epoxy resin composition and its tensile shear adhesive strength to a mild steel plate were measured. After standing for 24 hours at a temperature of 23°C and a humidity of 50%RH, the cured product had a hardness of 80, proving a sufficiently high hardness. After standing for 24 hours at a temperature of 23°C and a humidity of 50%RH, it showed a tensile shear adhesive strength of 10.7 MPa to a mild steel plate, proving that it had a sufficiently high adhesive strength to serve as a fast-curing type adhesive. Results are given in Table 4.

In the evaluation of adhesion to glass, it was shown that adhesion was maintained for 72 hours after the onset of hanging. Results are given in Table 5.

### Example 4

Except for using 9.6 g (96.0 parts by mass) of Polythiol QE-340M, manufactured by Toray Fine Chemicals Co., Ltd., as the thiol compound and using 0.4 g (4.0 parts by mass) of triethylenetetramine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -4.5 and a b* value of 6.8 according to the color system, and the cured product was colorless. Results are given in Table 1.

In addition, the hardness of the cured product of the epoxy resin composition and its tensile shear adhesive strength to a mild steel plate were measured. After standing for 24 hours at a temperature of 23°C and a humidity of 50%RH, the cured product had a hardness of 80, proving a sufficiently high hardness. After standing for 24 hours at a temperature of 23°C and a humidity of 50%RH, it showed a tensile shear adhesive strength of 12.8 MPa to a mild steel plate, proving that it had a sufficiently high adhesive strength to serve as a fast-curing type adhesive. Results are given in Table 4.

In the evaluation of adhesion to glass, it was shown that adhesion was maintained for 72 hours after the onset of hanging. Results are given in Table 5.

### Example 5

Except for using 7.0 g (70.0 parts by mass) of Polythiol QE-340M, manufactured by Toray Fine Chemicals Co., Ltd., as the thiol compound and using 3.0 g (30.0 parts by mass) of triethylenetetramine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 3 minutes. After 24 hours, the lightness and chromaticity values of the 1 cm thick cured epoxy resin were measured by the same procedure as in Example 1. The 1 cm thick cured product had an a* chromatic value of -6.6 and a b* value of 11.6 according to the color system, and the cured product was colorless. Results are given in Table 1.

In addition, the hardness of the cured product of the epoxy resin composition and its tensile shear adhesive strength to a mild steel plate were measured. After standing for 24 hours at a temperature of 23°C and a humidity of 50%RH, the cured product had a hardness of 79, proving a sufficiently high hardness. After standing for 24 hours at a temperature of 23°C and a humidity of 50%RH, it showed a tensile shear adhesive strength of 13.5 MPa to a mild steel plate, proving that it had a sufficiently high adhesive strength to serve as a fast-curing type adhesive. Results are given in Table 4.

In the evaluation of adhesion to glass, it was shown that adhesion was maintained for 72 hours after the onset of hanging. Results are given in Table 5.

### Example 6

Except for using 9.6 g (96.0 parts by mass) of Polythiol QE-340M, manufactured by Toray Fine Chemicals Co., Ltd., as the thiol compound and using 0.4 g (4.0 parts by mass) of diethylenetriamine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -4.3 and a b* value of 5.9 according to the color system, and the cured product was colorless. Results are given in Table 1.

In addition, the hardness of the cured product of the epoxy resin composition and its tensile shear adhesive strength to a mild steel plate were measured. After standing for 24 hours at a temperature of 23°C and a humidity of 50%RH, the cured product had a hardness of 80, proving a sufficiently high hardness. After standing for 24 hours at a temperature of 23°C and a humidity of 50%RH, it showed a tensile shear adhesive strength of 10.1 MPa to a mild steel plate, proving that it had a sufficiently high adhesive strength to serve as a fast-curing type adhesive. Results are given in Table 4.

In the evaluation of adhesion to glass, it was shown that adhesion was maintained for 72 hours after the onset of hanging. Results are given in Table 5.

### Example 7

Except for using 7.0 g (70.0 parts by mass) of Polythiol QE-340M, manufactured by Toray Fine Chemicals Co., Ltd., as the thiol compound and using 3.0 g (30.0 parts by mass) of diethylenetriamine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 2 minutes. After 24 hours, the lightness and chromaticity values of the 1 cm thick cured epoxy resin were measured by the same procedure as in Example 1. The 1 cm thick cured product had an a* chromatic value of -5.4 and a b* value of 9.3 according to the color system, and the cured product was colorless. Results are given in Table 1.

In addition, the hardness of the cured product of the epoxy resin composition and its tensile shear adhesive strength to a mild steel plate were measured. After standing for 24 hours at a temperature of 23°C and a humidity of 50%RH, the cured product had a hardness of 80, proving a sufficiently high hardness. After standing for 24 hours at a temperature of 23°C and a humidity of 50%RH, it showed a tensile shear adhesive strength of 10.5 MPa to a mild steel plate, proving that it had a sufficiently high adhesive strength to serve as a fast-curing type adhesive. Results are given in Table 4.

In the evaluation of adhesion to glass, it was shown that adhesion was maintained for 72 hours after the onset of hanging. Results are given in Table 5.

### Example 8

Except for using 9.7 g (97.0 parts by mass) of Polythiol QE-340M, manufactured by Toray Fine Chemicals Co., Ltd., as the thiol compound and using 0.3 g (3.0 parts by mass) of ethylenediamine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -4.4 and a b* value of 6.1 according to the color system, and the cured product was colorless. Results are given in Table 1.

In addition, the hardness of the cured product of the epoxy resin composition and its tensile shear adhesive strength to a mild steel plate were measured. After standing for 24 hours at a temperature of 23°C and a humidity of 50%RH, the cured product had a hardness of 77, proving a sufficiently high hardness. After standing for 24 hours at a temperature of 23°C and a humidity of 50%RH, it showed a tensile shear adhesive strength of 14.4 MPa to a mild steel plate, proving that it had a sufficiently high adhesive strength to serve as a fast-curing type adhesive. Results are given in Table 4.

In the evaluation of adhesion to glass, it was shown that adhesion was maintained for 72 hours after the onset of hanging. Results are given in Table 5.

### Example 9

Except for using 9.8 g (98.0 parts by mass) of Polythiol QE-340M, manufactured by Toray Fine Chemicals Co., Ltd., as the thiol compound and using 0.2 g (2.0 parts by mass) of 1,3-diaminopropane as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -3.8 and a b* value of 5.8 according to the color system, and the cured product was colorless. Results are given in Table 1.

In addition, the hardness of the cured product of the epoxy resin composition and its tensile shear adhesive strength to a mild steel plate were measured. After standing for 24 hours at a temperature of 23°C and a humidity of 50%RH, the cured product had a hardness of 79, proving a sufficiently high hardness. After standing for 24 hours at a temperature of 23°C and a humidity of 50%RH, it showed a tensile shear adhesive strength of 11.4 MPa to a mild steel plate, proving that it had a sufficiently high adhesive strength to serve as a fast-curing type adhesive. Results are given in Table 4.

In the evaluation of adhesion to glass, it was shown that adhesion was maintained for 72 hours after the onset of hanging. Results are given in Table 5.

### Example 10

Under the conditions of 23°C and 50%RH, 28.5 g (95.0 parts by mass) of a thiol compound (Polythiol QE-340M, manufactured by Toray Fine Chemicals Co., Ltd.) and 1.5 g (5.0 parts by mass) of an amine compound (BB-AMINE 3138, manufactured by BB RESINS SRL) were premixed with 30 g (100.0 parts by mass) of an epoxy resin (jER828, manufactured by Mitsubishi Chemical Corporation, bisphenol A type epoxy resin with epoxy equivalent of 184 to 194) using a spatula for 15 seconds, followed by deaeration and mixing to prepare an epoxy resin composition.

For the resulting epoxy resin composition, the time required for a toothpick to become immovable was measured at 23°C. The toothpick became immovable in 8 minutes. Then, the epoxy resin composition was cured. After 24 hours following the mixing, the lightness and chromaticity values of the 3 cm thick cured epoxy resin were measured. The 3 cm thick cured product had an a* chromatic value of -5.7 and a b* value of 12.1 according to the color system, and the cured product was colorless. Results are given in Table 1.

### Comparative example 1

Except for using 9.1 g (91.0 parts by mass) of Polythiol QE-340M, manufactured by Toray Fine Chemicals Co., Ltd., as the thiol compound and using 0.9 g (9.0 parts by mass) of N,N'-dimethylethylenediamine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromaticity value of -5.5 and a b* chromaticity value of 23.1 according to the color system, and the cured product was found colored yellow. Results are given in Table 2.

### Comparative example 2

Except for using 9.8 g (98.0 parts by mass) of Polythiol QE-340M, manufactured by Toray Fine Chemicals Co., Ltd., as the thiol compound and using 0.2 g (2.0 parts by mass) of N,N,N',N'-tetramethylethylenediamine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -4.5 and a b* value of 24.2 according to the color system, and the cured product was found colored yellow. Results are given in Table 2.

### Comparative example 3

Except for using 9.85 g (98.5 parts by mass) of Polythiol QE-340M, manufactured by Toray Fine Chemicals Co., Ltd., as the thiol compound and using 0.15 g (1.5 parts by mass) of N,N'-dimethyl-1,3-propanediamine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -4.9 and a b* value of 15.8 according to the color system, and the cured product was found colored yellow. Results are given in Table 2.

### Comparative example 4

Except for using 9.8 g (98.0 parts by mass) of Polythiol QE-340M, manufactured by Toray Fine Chemicals Co., Ltd., as the thiol compound and using 0.2 g (2.0 parts by mass) of bis(2-dimethylaminoethyl)ether as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromaticity value of -5.2 and a b* chromaticity value of 68.9 according to the color system, and the cured product was found colored brown. Results are given in Table 2.

### Comparative example 5

Except for using 9.6 g (96.0 parts by mass) of Polythiol QE-340M, manufactured by Toray Fine Chemicals Co., Ltd., as the thiol compound and using 0.4 g (4.0 parts by mass) of 2,4,6-tris(dimethylaminomethyl)phenol (ANCAMINE K-54, manufactured by Evonik Industries) as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -7.2 and a b* value of 24.8 according to the color system, and the cured product was found colored yellow. Results are given in Table 2.

Specimens of the cured product were stored at 23°C for 7 days or 30 days to measure the aging variation in the lightness value and the a* and b* chromaticity values of the 1 cm thick cured product. Results are given in Table 3. The cured product was found colored yellow.

In addition, the hardness of the cured product of the epoxy resin composition and its tensile shear adhesive strength to a mild steel plate were measured. After standing for 24 hours at a temperature of 23°C and a humidity of 50%RH, the cured product had a hardness of 82, proving a sufficiently high hardness. After standing for 24 hours at a temperature of 23°C and a humidity of 50%RH, it showed a tensile shear adhesive strength of 4.0 MPa to a mild steel plate. Results are given in Table 4. The epoxy resin composition specified in Comparative example 5 has been generally used as a fast-curing type adhesive, proving that, in terms of adhesive strength, an epoxy resin composition can serve for practical uses if it has a tensile shear adhesive strength of 4.0 MPa or more.

In the evaluation of adhesion to glass, it was shown that adhesion was maintained for 72 hours after the onset of hanging. Results are given in Table 5.

### Comparative example 6

Except for using 9.6 g (96.0 parts by mass) of Polythiol QE-340M, manufactured by Toray Fine Chemicals Co., Ltd., as the thiol compound and using 0.4 g (4.0 parts by mass) of N,N'-dimethylcyclohexylamine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -5.3 and a b* value of 18.1 according to the color system, and the cured product was found colored yellow. Results are given in Table 2.

### Comparative example 7

Except for using 9.5 g (95.0 parts by mass) of Polythiol QE-340M, manufactured by Toray Fine Chemicals Co., Ltd., as the thiol compound and using 0.5 g (5.0 parts by mass) of dimethylamine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -5.3 and a b* value of 23.5 according to the color system, and the cured product was found colored yellow. Results are given in Table 2.

### Comparative example 8

Except for using 9.75 g (97.5 parts by mass) of Polythiol QE-340M, manufactured by Toray Fine Chemicals Co., Ltd., as the thiol compound and using 0.25 g (2.5 parts by mass) of 2-(dimethylamino)ethanol as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromaticity value of -1.4 and a b* chromaticity value of 38.1 according to the color system, and the cured product was found colored orange. Results are given in Table 2.

### Comparative example 9

Except for using 7.6 g (76.0 parts by mass) of Polythiol QE-340M, manufactured by Toray Fine Chemicals Co., Ltd., as the thiol compound and using 2.4 g (24.0 parts by mass) of N-methyldiethanolamine as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -5.8 and a b* value of 40.7 according to the color system, and the cured product was found colored orange. Results are given in Table 2.

### Comparative example 10

Except for using 9.7 g (97.0 parts by mass) of Polythiol QE-340M, manufactured by Toray Fine Chemicals Co., Ltd., as the thiol compound and using 0.3 g (3.0 parts by mass) of N,N'-bis[3-(dimethylamino)propyl]urea as the amine compound, the same procedure as in Example 1 was carried out. As the epoxy resin, 10 g (100.0 parts by mass) of jER828, manufactured by Mitsubishi Chemical Corporation, was used as in Example 1.

The curing time at 23°C was measured by the same procedure as in Example 1. The composition cured in 10 minutes. After 24 hours, the lightness and chromaticity values of the 1 cm thick cured epoxy resin were measured by the same procedure as in Example 1. The 1 cm thick cured product had an a* chromatic value of -5.4 and a b* value of 19.7 according to the color system, and the cured product was found colored yellow. Results are given in Table 2.

In the evaluation of adhesion to glass, it was shown that adhesion was maintained for 72 hours after the onset of hanging. Results are given in Table 5.

### Comparative example 11

Under the conditions of 23°C and 50%RH, 28.8 g (96.0 parts by mass) of a thiol compound (Polythiol QE-340M, manufactured by Toray Fine Chemicals Co., Ltd.) and 1.2 g (4.0 parts by mass) of an amine compound (2,4,6-tris(dimethylaminomethyl)phenol, ANCAMINE K-54, manufactured by Evonik Industries) were premixed with 30 g (100.0 parts by mass) of an epoxy resin (jER828, manufactured by Mitsubishi Chemical Corporation, bisphenol A type epoxy resin with epoxy equivalent of 184 to 194) using a spatula for 15 seconds, followed by deaeration and mixing to prepare an epoxy resin composition.

For the resulting epoxy resin composition, the time required for a toothpick to become immovable was measured at 23°C. The toothpick became immovable in 8 minutes. Then, the epoxy resin composition was cured. After 24 hours following the mixing, the lightness and chromaticity values of the 3 cm thick cured epoxy resin were measured. The 3 cm thick cured product had an a* chromaticity value of 6.0 and a b* chromaticity value of 44.0 according to the color system, and the cured product was found colored orange. Results are given in Table 2.

### [Table 1]

**[Table 1]**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| jER828 [g] | | 10 | 10 | 10 | 10 | 10 | 10 | 10 | 10 | 10 | 30 |
| QE-340M [g] | | 9.5 | 8.9 | 7.0 | 9.6 | 7.0 | 9.6 | 7.0 | 9.7 | 9.8 | 28.5 |
| type of amine compound | | BB-AMINE 3138 | BB-AMINE 3138 | BB-AMINE 3138 | triethylenetetramine | triethylenetetramine | diethylenetriamine | diethylenetriamine | ethylenediamine | 1,3-diaminopropane | BB-AMINE 3138 |
| amine compound [g] | | 0.5 | 1.1 | 3.0 | 0.4 | 3.0 | 0.4 | 3.0 | 0.3 | 0.2 | 1.5 |
| curing time [min] | | 10 | 5 | 3 | 10 | 3 | 10 | 2 | 10 | 10 | - |
| lightness | L* | 73.0 | 69.2 | 71.0 | 71.3 | 70.8 | 71.5 | 74.1 | 72.9 | 64.0 | 65.2 |
| chromaticity | a* | -4.7 | -4.5 | -4.9 | -4.5 | -6.6 | -4.3 | -5.4 | -4.4 | -3.8 | -5.7 |
| | b* | 7.4 | 6.3 | 7.3 | 6.8 | 11.6 | 5.9 | 9.3 | 6.1 | 5.8 | 12.1 |
| color of cured product | | colorless | colorless | colorless | colorless | colorless | colorless | colorless | colorless | colorless | colorless |

| | | | | | | | | | | | |
|---|---|---|---|---|---|---|---|---|---|---|---|
| In Example 10, the toothpick required 8 minutes to become immovable. | | | | | | | | | | | |

As seen from Table 1, the epoxy resin compositions prepared in Examples 1 to 9 had curing times of 10 minutes or less, indicating that fast-curing, colorless cured epoxy resin products were obtained. The epoxy resin composition prepared in Example 10 formed a fast-curing, colorless cured epoxy resin product.

### [Table 2]

**[Table 2]**

| | | Comparative example 1 | Comparative example 2 | Comparative example 3 | Comparative example 4 | Comparative example 5 | Comparative example 6 | Comparative example 7 | Comparative example 8 | Comparative example 9 | Comparative example 10 | Comparative example 11 |
|---|---|---|---|---|---|---|---|---|---|---|---|---|
| jER828 [g] | | 10 | 10 | 10 | 10 | 10 | 10 | 10 | 10 | 10 | 10 | 30 |
| QE-340M [g] | | 9.1 | 9.8 | 9.85 | 9.8 | 9.6 | 9.6 | 9.5 | 9.75 | 7.6 | 9.7 | 28.8 |
| type of amine compound | | N,N'-dimethylethylenediamine | N,N,N',N'-tetramethylethylenediamine | N,N'-dimethyl-1,3-propanediamine | bis(2-dimethylaminoethyl) ether | 2,4,6-tris(dimethylaminomethyl) phenol | N,N-dimethylcyclohexylamine | dimethylamine | 2-(dimethyl-amino) ethanol | N-methyldiethanolamine | N,N'-bis-[3-(dimethyl-amino)propyl] urea | 2,4,6-tris-(dimethylaminomethyl) phenol |
| amine compound [g] | | 0.9 | 0.2 | 0.15 | 0.2 | 0.4 | 0.4 | 0.5 | 0.25 | 2.4 | 0.3 | 1.2 |
| curing time [min] | | 10 | 10 | 10 | 10 | 10 | 10 | 10 | 10 | 10 | 10 | - |
| lightness | L* | 63.7 | 65.6 | 59.6 | 57.4 | 57.6 | 71.2 | 60.2 | 57.1 | 64.2 | 66.1 | 50.5 |
| chromaticity | a* | -5.5 | -4.5 | -4.9 | 5.2 | -7.2 | -5.3 | -5.3 | -1.4 | -5.8 | -5.4 | 6.0 |
| | b* | 23.1 | 24.2 | 15.8 | 68.9 | 24.8 | 18.1 | 23.5 | 38.1 | 40.7 | 19.7 | 44.0 |
| color of cured product | | yellow | yellow | yellow | brown | yellow | yellow | yellow | orange | orange | yellow | orange |

| | | | | | | | | | | | | |
|---|---|---|---|---|---|---|---|---|---|---|---|---|
| In Comparative example 12, the toothpick required 8 minutes to become immovable. | | | | | | | | | | | | |

As seen from Table 2, the epoxy resin compositions prepared in Comparative examples 1 to 10 failed to form colorless cured epoxy resin products. In particular, the epoxy resin composition prepared in Comparative example 11 gave a cured product colored orange. As compared with the epoxy resin composition prepared in Comparative example 5, the epoxy resin composition prepared in Comparative example 11 had a darker color.

### [Table 3]

**[Table 3]**

| | | Example 1 | | | Comparative example 5 | | |
|---|---|---|---|---|---|---|---|
| curing time (hours or days) | | 24 hours | 7 days | 30 days | 24 hours | 7 days | 30 days |
| lightness | L* | 73.0 | 72.0 | 72.5 | 57.6 | 56.5 | 57.5 |
| chromaticity | a* | -4.7 | -4.5 | -5.0 | -7.2 | -6.9 | -7.2 |
| | b* | 7.4 | 7.1 | 7.3 | 24.8 | 23.2 | 24.7 |
| color of cured product | | colorless | colorless | colorless | yellow | yellow | yellow |

As seen from Table 3, the epoxy resin composition prepared in Example 1 remained colorless after 30 days. As compared with this, the epoxy resin composition prepared in Comparative example 5 remained colored after 30 days.

### [Table 4]

**[Table 4]**

| | Example 1 | Example 2 | Example 3 | Example 4 | Example 5 | Example 6 | Example 7 | Example 8 | Example 9 | Comparative example 5 |
|---|---|---|---|---|---|---|---|---|---|---|
| hardness of cured product formed by curing epoxy resin composition (after standing for 24 hours at 23°C and 50%RH) | 79 | 78 | 80 | 80 | 79 | 80 | 80 | 77 | 79 | 82 |
| tensile shear adhesive strength to mild steel plate (after standing for 24 hours at 23°C and 50%RH) | 11.2 MPa | 8.0 MPa | 10.7 MPa | 12.8 MPa | 13.5 MPa | 10.1 MPa | 10.5 MPa | 14.4 MPa | 11.4 MPa | 4.0 MPa |

As seen from Table 3, the epoxy resin compositions prepared in Examples 1 to 9, as compared with the epoxy resin composition prepared in Comparative example 5, were higher in tensile shear adhesive strength to a mild steel plate, each proving a sufficiently high adhesive strength to serve as a fast-curing type adhesive. The cured products formed by curing the epoxy resin compositions prepared in Examples 1 to 9 had sufficiently high hardness, which was comparable to the hardness of the cured product formed by curing the epoxy resin composition prepared in Comparative example 5.

### [Table 5]

**[Table 5]**

| | Example 1 | Example 2 | Example 3 | Example 4 | Example 5 | Example 6 | Example 7 | Example 8 | Example 9 | Comparative example 5 | Comparative example 10 |
|---|---|---|---|---|---|---|---|---|---|---|---|
| adhesion to glass (after 72 hours following start of hanging) | acceptable | acceptable | acceptable | acceptable | acceptable | acceptable | acceptable | acceptable | acceptable | acceptable | acceptable |

As seen from Table 5, the epoxy resin compositions prepared in Examples 1 to 9 showed high adhesive strength to glass.

## Claims

1. An only slightly colored or completely colorless epoxy resin composition comprising an epoxy resin containing two or more epoxy groups in one molecule, a thiol compound containing two or more thiol groups in one molecule, and an amine compound.

2. An epoxy resin composition as set forth in claim 1, that forms a cured product having an a* value of -15 to 15 and a b* value of -15 to 15 as chromaticity features according to the color system.

3. An epoxy resin composition as set forth in either claim 1 or 2, wherein the amine compound is an aliphatic amine.

4. An epoxy resin composition as set forth in either claim 1 or 2, wherein the amine compound is an amine containing two or more amino groups in one molecule and containing no tertiary amino group in the molecule.

5. An epoxy resin composition as set forth in either claim 1 or 2, wherein the amine compound is an amine containing 3 or more amino groups in one molecule.

6. An epoxy resin composition as set forth in either claim 1 or 2, wherein the amine compound is a modified product produced from an original amine containing 3 or more amino groups in one molecule.

7. An epoxy resin composition as set forth in any one of claims 2 to 6, wherein the *b chromaticity value is 0 to 12 according to the color system.

8. An epoxy resin composition as set forth in any one of claims 2 to 7, wherein the a* chromaticity value is -7 to 0 according to the color system.

9. An epoxy resin composition as set forth in any one of claims 1 to 8, wherein the use of 10 g of the epoxy resin ensures a curing time of 1 to 15 minutes at 23°C.

10. An epoxy resin composition as set forth in any one of claims 1 to 9, that serves as an adhesive.

11. An adhesive containing an epoxy resin composition as set forth in any one of claims 1 to 9.
